# FASCICULE DE BREVET EUROPEEN

(11) **EP 0 298 021 B1**
(45) Date de publication et mention de la délivrance du brevet: **27.10.1993**
(21) Numéro de dépôt: 88810367.8
(22) Date de dépôt: 06.06.1988
(51) Int. Cl.: E05D 15/06, F16C 29/06, B61B 13/04

(54) **Chariot porteur pour rail suspendu**
Tragwagen für Hängeschiene
Carriage for a suspended rail

(30) Priorité: 17.06.1987 FR 8708759
(43) Date de publication de la demande: 04.01.1989
(73) Titulaire: MANTION S.A., F-25000 Besançon (FR)
(72) Inventeur: Verheyde, Daniel, F-35000 Rennes (FR); Requet, Claude, F-25170 Recologne (FR)
(74) Mandataire: Kiliaridis, Constantin

(56) Documents cités:
- EP-A- 0 134 848
- WO-A-85/01997
- DE-A- 1 284 699
- DE-A- 3 117 491
- FR-A- 2 271 442
- FR-A- 2 447 442
- GB-A- 1 302 026
- US-A- 3 758 176

## Description

L'invention concerne la manutention des charges suspendues, particulièrement un chariot porteur pour rail profilé suspendu, comportant des moyens de roulement constitués par une pluralité de rouleaux tournant sur eux-mêmes séparés en deux groupes espacés latéralement, un certain nombre de rouleaux de chaque groupe portant ensemble sur les chemins de roulement du rail profilé au travers d'une fenêtre ouverte sur le chant du chariot orienté contre lesdits chemins de roulement.

Dans ce domaine on connaît des chariots pour portes à déplacement droit ou latéral, pour portes pliantes en accordéon, pour portes basculantes droites ou à sections, des chariots pour la manutention par rails suspendus, pour la suspension de câbles électriques ou de tuyauteries souples.

Tous ces chariots comportent des roues qui tournent sur un ou plusieurs chemins de roulement assez rapidement usés par la faible portance de la partie tangentielle des roues au contact desdits chemins.

On a proposé dans le US-A-3 758 176 une solution à ce problème, consistant à former un chariot comprenant un corps ayant une section cruciforme, des rouleaux étant emprisonnés entre ledit corps et deux flasques. Les rouleaux inférieurs s'appuient sur le chemin de roulement augmentant ainsi la surface d'appui et diminuant la pression exercée sur les rouleaux. Ce chariot est d'une construction massive et coûteuse.

On a également proposé dans le EP-A-0 134 848 un chariot formé de deux plaques parallèles assemblées par deux axes, formant une cage pour un rouleau dont les tourillons reposent dans des paliers, avec roulements à billes, formés à même les plaques. Le rouleau a une grande surface latérale.

La présente invention propose aussi d'augmenter la surface portante des moyens de roulement afin d'éviter l'usure prématurée des chemins de roulement d'une part, de mieux répartir la charge transportée d'autre part, par une construction simple.

A ces fins, le chariot transporteur selon l'invention est caractérisé par le fait que chaque groupe de rouleaux est logé dans une cage située à l'intérieur d'une monture, que les deux montures sont identiques, formées chacune par un parallélépipède rectangle, que lesdites montures sont maintenues strictement parallèles par un arbre transversal.

Chaque rouleau est un cylindre plein dont au moins une extrémité comporte un tourillon de moindre diamètre, concentrique à l'axe géométrique du cylindre.

La cage est formée de deux parties rectilignes parallèles reliées à leurs extrémités par deux demi-cercles de même rayon.

La section de la cage est rectangulaire, sa largeur est au moins égale à la longueur des rouleaux, tourillons compris, sa hauteur est au moins égale au diamètre des rouleaux.

La cage comporte, dans sa partie tangentielle au chant de la monture orienté vers le chemin de roulement du rail profilé, une fenêtre dont la longueur correspond à la somme de plusieurs diamètres de rouleaux, dont la largeur correspond à la longueur des rouleaux diminuée de la hauteur des tourillons, la hauteur de la cage au droit de la fenêtre étant rétrécie de façon que les rouleaux affleurent sur le chemin de roulement du rail profilé.

La cage est fermée, après la mise en place des rouleaux, par un flasque contre lequel s'appuient les tourillons des rouleaux.

Ce flasque s'inscrit exactement dans le plus grand périmètre intérieur de la cage et comporte un rebord périphérique rectangulaire pénètrant à l'intérieur de la cage, le périmètre extérieur de ce rebord coïncidant en tous points avec le périmètre de la cage.

Ce rebord est continu, il constitue le chemin de roulement des tourillons des rouleaux à l'intérieur de la cage.

Selon une forme d'exécution particulière, chaque monture du chariot est munie, sur au moins une de ses extrémités, d'une échancrure dans laquelle est placé un galet-guide tournant dans un plan perpendiculaire au plan de symétrie longitudinal de la monture. Ce galet est porté par un arbre dont l'axe est parallèle à ce plan de symétrie. Le diamètre du galet est supérieur à l'épaisseur de la monture, afin d'éviter le frottement de l'armature sur le bord intérieur du rail.

Les principaux avantages du chariot porteur selon l'invention résident dans une meilleure répartition des charges transportées sur le chemin de roulement du rail profilé suspendu dûe au nombre de rouleaux en contact avec ce chemin, d'où une usure moindre et la possibilité d'augmenter la charge en fonction des caractéristiques du rail profilé suspendu.

D'autres avantages ressortiront de la description d'une forme de réalisation préférentielle faite à titre d'exemple non limitatif et du dessin dans lequel :
- la figure 1 est une vue en perspective d'un chariot porteur dans un rail profilé;
- la figure 2 est une vue à plat d'une monture, le flasque étant enlevé;
- la figure 3 est une vue à plat du flasque obturant la cage;
- les figures 3a et 3b sont des détails de la figure 3;
- la figure 4 est une vue en coupe d'une monture; selon IV-IV de la figure 2.
- la figure 4a est une vue en coupe d'une rouleau.

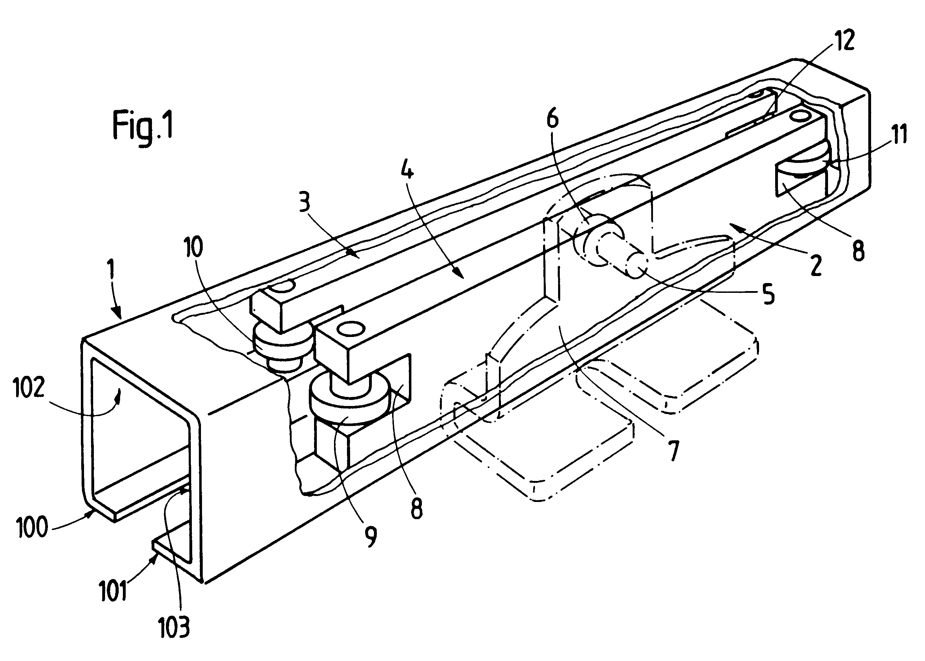

La figure 1 représente un rail profilé 1 suspendu comportant deux chemins de roulement 100, 101 entre lesquels circule un chariot 2 constitué de deux montures 3, 4, formées chacune d'un parallélépipède rectangle mince, maintenues strictement parallèles par un arbre transversal 5 et une bague 6 concentrique à l'arbre 5 qui détermine l'écartement des montures correspondant à celui des chemins de roulement 100, 101.

Un support de charge 7 est suspendu à l'arbre 5, entre les montures.

Chaque monture 3, 4 comporte à chacune de ses extrémités une échancrure 8 dans laquelle est logé un galet-guide 9, 10, 11, 12 tournant dans un plan perpendiculaire au plan de symétrie longitudinal de la monture qui le porte. Ces galets-guides 9, 10, 11, 12 s'appuient contre les parois latérales intérieures 102, 103 du rail 1 pour maintenir le chariot en bonne position lors de son déplacement dans le rail.

Afin d'utiliser au maximum l'espace compris entre les parois 102, 103, les galets 9, 10 se faisant vis-à-vis sur l'extrémité du chariot tournent dans des plans superposés et parallèles de façon que les moyens de roulement de chaque monture soient guidés sur le chemin de roulement 100, 101 qui leur correspond sans qu'aucune torsion exercée sur le support 7 ne puisse faire dérailler le chariot 2.

Ainsi les galets-guides 10, 12, d'une même monture 3 tournent dans deux plans géométriques parallèles, qui sont perpendiculaires à la paroi intérieure 102 du profil 1 et les galets-guides 9, 11 de l'autre monture 4 tournent contre l'autre paroi intérieure 103 du profil dans les mêmes plans mais décalés par rapport au galet-guide qui lui fait face.

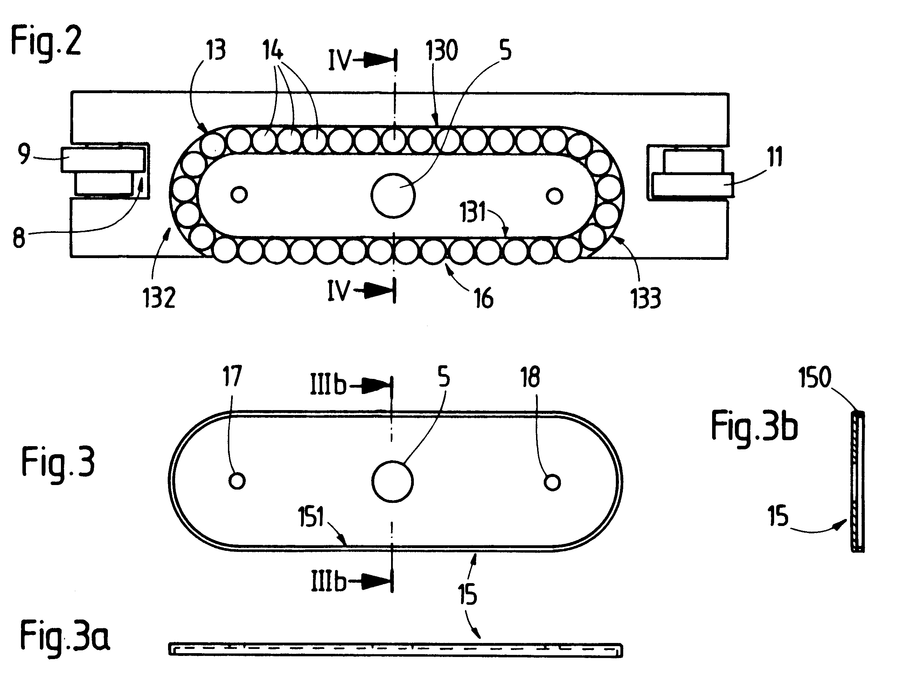

La figure 2 est une vue à plat d'un des parallélépipèdes rectangles constituant chaque monture 3, 4 dans l'épaisseur duquel est creusée une cage 13 contenant les rouleaux 14 composant ensemble les moyens de roulement du chariot 2 sur les chemins de roulement 100, 101 du rail 1.

Cette cage 13 est fermée, après mise en place des rouleaux 14, par un flasque 15 dont le périmètre extérieur coïncide exactement avec le plus grand périmètre intérieur de la cage.

La cage comporte deux parties rectilignes 130, 131 parallèles identiques reliées à leurs extrémités par deux demi-cercles 132, 133.

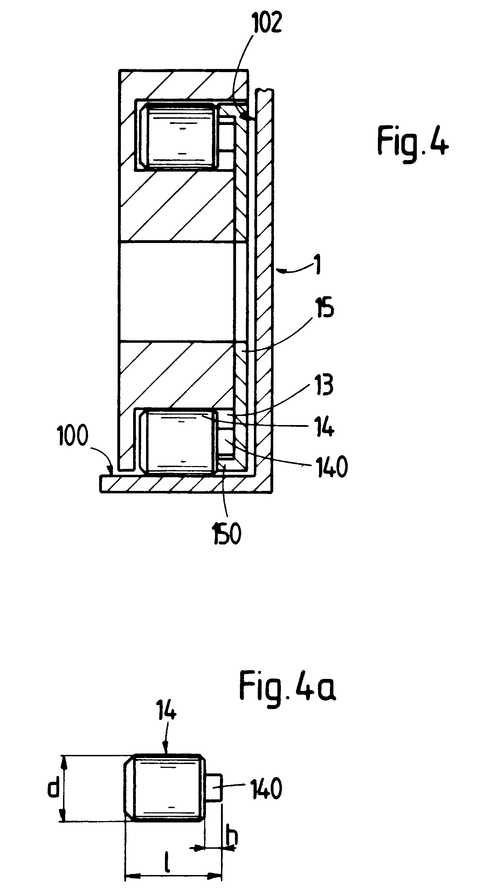

Les rouleaux 14, figure 4a, sont des cylindres pleins de même diamètre dont une extrémité comporte un tourillon 140 de moindre diamètre, concentrique à l'axe géométrique du cylindre.

La section de la cage 13 est rectangulaire, sa largeur est au moins égale à la longueur l des rouleaux 14, tourillons 140 compris, sa hauteur est au moins égale au diamètre d des rouleaux.

La cage 13 comporte, dans sa partie rectiligne 131, tangentielle au chant de la monture 3, 4 orienté vers le chemin de roulement 100, 101 du rail 1, une fenêtre 16 dont la longueur, égale à celle de la partie rectiligne 131, correspond à la somme de plusieurs diamètres d de rouleaux 14 et dont la largeur correspond à la longueur l des rouleaux diminuée de la hauteur h des tourillons 140.

Au droit de cette fenêtre 16, la hauteur de la cage 13 est diminuée de façon que les rouleaux 14 affleurent hors de la fenêtre 16 et portent, par une de leurs génératrices, sur le chemin de roulement 100, 101 du rail 1.

Le flasque 15 comporte un rebord périphérique 150 rectangulaire pénètrant à l'intérieur de la cage 13 dont il épouse très exactement le plus grand périmètre : ce rebord 150 constitue le chemin de roulement des tourillons 140 qui sont ainsi maintenus dans la cage 13 y compris lors de leur passage le long de la fenêtre 16. Ce rebord 150 est continu sur tout le périmètre du flasque 15.

Le flasque 15 est fixé contre la cage 13 par deux vis 17, 18, sa face extérieure est dans le même plan que la face du parallélépipède rectangle qui le supporte, sans aspérité ni dépassement.

Une partie 151 du rebord 150 du flasque 15 située au niveau de la fenêtre 16 en constitue un des côtés, dans l'alignement du chant parallèle au chemin de roulement 100, 101. Cette partie 151 du rebord empêche les rouleaux 14 de sortir de la cage 13 au niveau de la fenêtre 16.

Chaque rouleau 14 tourne librement dans la cage 13 où il est maintenu par son tourillon 140 lequel s'appuie en rotation contre le rebord 150 du flasque 15.

La charge déplacée par le support 7 est répartie sur les génératrices des rouleaux 14 en contact avec les chemins de roulement 100, 101 par la fenêtre 16.

## Revendications

1. Chariot porteur pour rail (1) profilé suspendu, comportant des moyens de roulement constitués par une pluralité de rouleaux (14) tournant sur eux-mêmes séparés en deux groupes espacés latéralement, un certain nombre de rouleaux de chaque groupe portant ensemble sur les chemins de roulement (100, 101) du rail (1) profilé au travers d'une fenêtre (16) ouverte sur le chant du chariot orienté contre lesdits chemins de roulement, caractérisé par le fait que chaque groupe de rouleaux (14) est logé dans une cage située à l'intérieur d'une monture (3, 4), que les deux montures (3, 4) sont identiques, formées chacune par un parallélépipède rectangle, que lesdites montures (3, 4) sont maintenues strictement parallèles par un arbre transversal (5).

2. Chariot porteur selon la revendication 1, caractérisé par le fait que chaque rouleau (14) est un cylindre plein dont au moins une extrémité comporte un tourillon (140) de moindre diamètre, concentrique à l'axe géométrique du cylindre.

3. Chariot porteur selon la revendication 1, caractérisé par le fait que la cage (13) est formée de deux parties (130, 131) rectilignes parallèles identiques, reliées à leurs extrémités par deux demi-cercles (132, 133) de même rayon, par le fait que la section de la cage est rectangulaire, que sa largeur est au moins égale à la longueur (1) des rouleaux (14), tourillons (140) compris, que sa hauteur est au moins égale au diamètre (d) des rouleaux, par le fait que la cage comporte, dans sa partie rectiligne (131) tangentielle au chant de la monture (3, 4) orienté vers le chemin de roulement (100, 101) du rail (1), une fenêtre (16) dont la longueur correspond à la somme de plusieurs diamètres (d) de rouleaux, dont la largeur correspond à la longueur (1) des rouleaux diminuée de la hauteur (h) des tourillons (140), et par le fait que la hauteur de la cage est rétrécie au droit de la fenêtre de façon que les rouleaux affleurent hors de la fenêtre et portent par une de leurs génératrices sur le chemin de roulement (100, 101) du rail (1).

4. Chariot porteur selon la revendication 3, caractérisé par le fait que la cage (13) est fermée, après la mise en place de rouleaux (14), par un flasque (15) contre lequel s'appuient les tourillons (140) desdits rouleaux, par le fait que ce flasque s'inscrit exactement dans le plus grand périmètre intérieur de la cage au moyen d'un rebord périphérique (150) rectangulaire pénètrant à l'intérieur de la cage, et par le fait que ce rebord est continu sur tout le périmètre de la cage et constitue le chemin de roulement des tourillons des rouleaux à l'intérieur de la cage.

5. Chariot porteur selon la revendication 1, caractérisé par le fait que chaque monture (3, 4) comporte, sur au moins une de ses extrémités, une échancrure (8) dans laquelle est placé un galet-guide (9, 10, 11, 12) tournant dans un plan perpendiculaire au plan de symétrie longitudinal de la monture, par le fait que ce galet-guide est porté par un arbre dont l'axe est dans ledit plan de symétrie, et par le fait que le diamètre de ce galet-guide est supérieur à l'épaisseur de la monture.

6. Chariot porteur selon la revendication 5, caractérisé par le fait que les galets-guides (10, 12) d'une même monture (3) tournent dans deux plans géométriques parallèles, perpendiculairement à la paroi intérieure (102) du profil (1) et par le fait que les galets-guides (9, 11) de l'autre monture (4) tournent contre l'autre paroi (103) intérieure du profil dans les mêmes plans mais décalés par rapport au galet-guide qui lui fait face.

## Claims

1. Support carriage for a suspended profiled track (1) including rolling means made up of a plurality of rollers (14) rotating on themselves and separated into two laterally-spaced groups, a certain number of rollers of each group bearing together on the raceways (100, 101) of the profiled track (1) through a window (16) which opens onto the edge of the carriage directed against the said raceways, characterized in that each group of rollers (14) is housed in a cage located inside a fixture (3, 4), that the two fixtures (3, 4) are identical, each one formed of a right-angled parallelepiped, that the said fixtures (3, 4) are held strictly parallel by a transverse shaft (5).

2. Support carriage according to Claim 1, characterized in that each roller (14) is a solid cylinder at least one end of which includes a journal (140) of smaller diameter, concentric with the geometric axis of the cylinder.

3. Support carriage according to Claim 1, characterized in that the cage (13) is formed of two identical parallel rectilinear parts (130, 131) connected at their ends by two semicircles (132, 133) of like radius, in that the cross-section of the cage is rectangular, in that its width is at least equal to the length (1) of the rollers (14), including journals (140), in that its height is at least equal to the diameter (d) of the rollers, in that the cage includes, in its rectilinear part (131) tangential to the edge of the fixture (3, 4) directed towards the raceway (100, 101) of the track (1) a window (16) whose length corresponds to the sum of several diameters (d) of rollers, whose width corresponds to the length (1) of the rollers decreased by the height (h) of the journals (140), and in that the height of the cage is narrowed in line with the window so that the rollers are flush out of the window and bear via one of their generatrices on the raceway (100, 101) of the track (1).

4. Support carriage according to Claim 3, characterized in that the cage (13) is closed, after the installation of the rollers (14), by a flange (15) against which the journals (140) of the said rollers bear, in that this flange fits exactly into the largest internal perimeter of the cage by means of a rectangular peripheral rim (150) penetrating inside the cage, and in that this rim is continuous over the entire perimeter of the cage and constitutes the raceway for the journals of the rollers inside the cage.

5. Support carriage according to Claim 1, characterized in that each fixture (3, 4) includes, on at least one of its ends, a notch (8) in which is placed a guide roller (9, 10, 11, 12) rotating in a plane which is perpendicular to the longitudinal plane of symmetry of the fixture, in that this guide roller is carried by a shaft whose axis is in the said plane of symmetry, and in that the diameter of this guide roller is greater than the thickness of the fixture.

6. Support carriage according to Claim 5, characterized in that the guide rollers (10, 12) of one same fixture (3) rotate in two parallel geometric planes perpendicular to the internal wall (102) of the section (1) and in that the guide rollers (9, 11) of the other fixture (4) rotate against the other internal wall (103) of the section in the same planes but offset with respect to the guide roller which faces them.

## Patentansprüche

1. Tragwagen für profilierte Hängeschiene (1), mit aus mehreren, um sich selber drehenden Rollen (14) bestehenden Rollmitteln, welche in zwei im seitlichen Abstand voneinander angeordnete Gruppen unterteilt sind, wobei eine bestimmte Anzahl von Rollen jeder Gruppe durch ein offenes Fenster (16) hindurch, welches auf der den Rollbahnen (100, 101) der profilierten Schiene (1) zugewandten Schmalseite des Wagens angeordnet ist, gemeinsam auf diesen Rollbahnen (100, 101) der Schiene ruhen, dadurch gekennzeichnet, dass jede Gruppe von Rollen (14) in einem Käfig untergebracht ist, der im Innern eines Gestells (3, 4) liegt, dass die beiden Gestelle (3, 4) identisch sind und jedes aus einem rechteckigen Parallelepiped gebildet ist und dass die erwähnten Gestelle (3, 4) durch eine Querwelle (5) streng parallel gehalten werden.

2. Tragwagen nach Anspruch 1, dadurch gekennzeichnet, dass jede Rolle (14) ein voller Zylinder ist, bei welchem wenigstens eine Seite einen konzentrisch zur geometrischen Achse des Zylinders liegenden Drehzapfen (140) aufweist.

3. Tragwagen nach Anspruch 1, dadurch gekennzeichnet, dass der Käfig (13) aus zwei geradlinigen, parallelen, identischen Teilen (130, 131) gebildet ist, die an ihren Enden durch zwei Halbkreise (132, 133) mit demselben Radius verbunden sind, dass der Querschnitt des Käfigs rechteckförmig ist, dass seine Breite wenigstens gleich der Länge (1) der Rollen (14), einschliesslich der Drehzapfen (140), dass seine Höhe wenigstens gleich dem Durchmesser (d) der Rollen ist, dass der Käfig an seinem geradlinigen Teil (131), welcher tangential zu der auf die Rollbahn (100, 101) der Schiene (1) gerichteten Schmalseite des Gestells (3, 4) liegt, ein Fenster (16) aufweist, dessen Länge der Summe mehrerer Durchmesser (d) der Rollen entspricht und dessen Breite der Länge (1) der Rollen, vermindert um die Höhe (h) der Drehzapfen (140), entspricht, und dass die Höhe des Käfigs vor dem Fenster derart verengt ist, dass die Rollen ausserhalb des Fensters ein wenig vorstehen und mit einer ihrer Mantellinien auf der Rollbahn (100, 101) der Schiene (1) ruhen.

4. Tragwagen nach Anspruch 3, dadurch gekennzeichnet, dass der Käfig (13) nach dem Einbau der Rollen durch einen Flansch (15) geschlossen wird, an welchem die Drehzapfen (140) der erwähnten Rollen anliegen, dass dieser Flansch mittels eines rechteckförmigen, in das Innere des Käfigs hineinragenden Umfangsrands (150) genau in den grössten inneren Umfang des Käfigs eingeschrieben ist und dass sich dieser Rand über den gesamten Umfang des Käfigs fortsetzt und die Rollbahn für die Drehzapfen der Rollen im Innern des Käfigs bildet.

5. Tragwagen nach Anspruch 1, dadurch gekennzeichnet, dass jedes Gestell (3, 4) an wenigstens einem seiner Enden eine Aussparung (8) aufweist, in welcher eine Führungsrolle (9, 10, 11, 12) angeordnet ist, die in einer senkrecht zur longitudinalen Symmetrieebene des Gestells drehbar ist, dass diese Führungsrolle von einer Welle getragen wird, deren Achse in der erwähnten Symmetrieebene liegt, und dass der Durchmesser dieser Führungsrolle grösser ist als die Dicke des Gestells.

6. Tragwagen nach Anspruch 5, dadurch gekennzeichnet, dass die Führungsrollen (10, 12) ein und desselben Gestells (3) in zwei parallelen geometrischen Ebenen drehbar sind, die senkrecht zur Innenwand (102) des Profils (1) orientiert sind, und dass die Führungsrollen (9, 11) des anderen Gestells (4) an der anderen Innenwand (103) des Profils in denselben Ebenen, jedoch in Bezug auf die gegenüberliegende Führungsrolle versetzt, abrollen.
